# EUROPEAN PATENT SPECIFICATION

(11) **EP 4 336 277 B1**
(45) Date of publication and mention of the grant of the patent: **03.06.2026**
(21) Application number: 23758197.0
(22) Date of filing: 17.07.2023
(51) Int. Cl.: H04M 1/02, G06F 1/20, G06F 1/16, G06F 3/01, G04G 17/04

(54) **ELECTRONIC DEVICE COMPRISING MOTOR HOUSING**
ELEKTRONISCHE VORRICHTUNG MIT MOTORGEHÄUSE
DISPOSITIF ÉLECTRONIQUE COMPRENANT UN BOÎTIER DE MOTEUR

(30) Priority: 19.07.2022 KR 20220089204; 08.09.2022 KR 20220114205
(43) Date of publication of application: 13.03.2024
(73) Proprietor: Samsung Electronics Co., Ltd., Suwon-si, Gyeonggi-do 16677 (KR)
(72) Inventor: PARK, Chungsoon, Suwon-si, Gyeonggi-do 16677 (KR); KANG, Junghyun, Suwon-si, Gyeonggi-do 16677 (KR); SHIN, Hyohoon, Suwon-si, Gyeonggi-do 16677 (KR); AHN, Jeongho, Suwon-si, Gyeonggi-do 16677 (KR); YUN, Heeyoung, Suwon-si, Gyeonggi-do 16677 (KR); JANG, Jonggwang, Suwon-si, Gyeonggi-do 16677 (KR); JANG, Dongheon, Suwon-si, Gyeonggi-do 16677 (KR)
(74) Representative: Gulde & Partner
(86) International application number: PCT/KR2023/010181
(87) International publication number: WO 2024/019450

(56) References cited:
- EP-A1- 3 480 674
- KR-A- 20180 025 126
- KR-A- 20190 064 996
- KR-A- 20190 096 593
- KR-A- 20200 100 973
- KR-A- 20220 066 637
- US-A1- 2013 225 065
- US-A1- 2016 313 773

## Description

### [Technical Field]

Various embodiments disclosed in this document relate to an electronic device, and more particularly, to an electronic device including a motor housing.

### [Background Art]

An electronic device, for example, a wearable electronic device, may be worn on a user's body. Because wearable electronic devices are highly portable, convenience of use may be improved. These electronic devices may include various active elements such as an application processor (AP), a radio-frequency integrated circuit (RFIC), a power management IC (PMIC), and a multimode multiband power amplifier (MMPA) in order to provide various functions to users. The various active elements may consume power for operation. As functions of electronic devices diversify and a performance thereof increases, power consumed by the various active elements may also increase. Power consumed by various active elements is converted into heat, and various active elements act as heat sources.

An electronic device, for example, a wearable electronic device, may be miniaturized and lightened to be worn on a user's body. To this end, components such as a printed board assembly, a housing, and a support member of the electronic device may be miniaturized and lightened.

US 2013/225065 A1 discloses a conventional mobile communication device including a heat transfer structure including a motor with a motor housing.

### [Disclosure of Invention]

### [Solution to Problem]

As a performance of the electronic device increases, a heat generation amount of a heat source increases, and as the electronic device becomes smaller, a size of a structure serving as a heat transfer area transferring and discharging a heat of the heat source to the outside may decrease. Therefore, in the case that the increased heat generation amount cannot be effectively discharged, a temperature of active elements such as APs may rise. An increase in temperature may cause malfunction and damage of the electronic device, and a performance of active elements may be limited to prevent the above-described malfunction and damage. In order to solve this problem, when an area of a structure for heat transfer and dissipation is increased, a size and weight of the electronic device may increase.

Various embodiments disclosed in this document may provide an electronic device with an improved heat dissipation capability.

The invention is defined by the appended claims. The description that follows is subjected to this limitation. Any disclosure lying outside the scope of said claims is only intended for illustrative as well as comparative purposes.

According to the invention, an electronic device including at least one heat generating element includes a printed board assembly on which the heat generating element is disposed; a battery; a battery support frame configured to support the battery therein; and a motor disposed between the printed board assembly and the battery support frame. The motor includes a motor housing including a first surface configured to directly or indirectly contact the printed board assembly and to receive a heat of the heat generating element from the printed board assembly, and a second surface configured to directly or indirectly contact the battery support frame and to transfer a heat of the heat generating element to the battery support frame.

In various embodiments, the electronic device may include a first thermal interface disposed between the first surface of the motor and the printed board assembly and including a thermally conductive material.

In various embodiments, the thermally conductive material may include a flexible material.

In various embodiments, the electronic device may include a second thermal interface disposed between the second surface of the motor and the battery support frame and including a thermally conductive material.

In various embodiments, the thermally conductive material may include a flexible material.

In various embodiments, the printed board assembly may include a heat transfer surface formed in an area facing the first surface of the motor.

In various embodiments, the heat generating element may include at least one ground electrode, and the heat transfer surface may be electrically connected to the ground electrode of the heat generating element.

According to the invention, the printed board assembly further includes an electrical component with a lower heat generation amount than that of the heat generating element, and the heat generating element is disposed closer to an area of the printed board assembly in contact with the first surface of the motor housing than the electrical component.

In various embodiments, the heat generating element may be disposed to at least partially overlap an area of the printed board assembly facing the first surface of the motor.

According to various embodiments disclosed in this document, as a heat of the heat generating element is spread to the battery support frame through the motor housing, the heat is spread to a wider area of the electronic device, and as a heat dissipation area of the electronic device is widened, temperature rise of the heat generating element of the electronic device can be reduced or performance degradation due to temperature rise can be reduced.

### [Brief Description of Drawings]

In connection with the description of the drawings, the same or similar reference numerals may be used for the same or similar elements.
FIG. 1 is a block diagram illustrating an electronic device in a network environment according to various embodiments.
FIG. 2 is a perspective view illustrating an electronic device according to some embodiments of the disclosure.
FIG. 3 is a perspective view illustrating a rear surface of the electronic device of FIG. 2 according to various embodiments of the disclosure.
FIG. 4 is an exploded perspective view illustrating the electronic device of FIG. 2 according to various embodiments of the disclosure.
FIG. 5A is a perspective view illustrating internal components of an electronic device according to various embodiments of the disclosure.
FIG. 5B is an exploded perspective view illustrating internal components of an electronic device according to various embodiments.
FIG. 5C is a cross-sectional view illustrating internal components of an electronic device according to various embodiments.
FIG. 5D is a top plan view illustrating a printed board assembly of an electronic device according to various embodiments.
FIG. 5E is a bottom plan view illustrating a printed board assembly of an electronic device according to various embodiments.
FIG. 5F is a cross-sectional view illustrating internal components of an electronic device according to an embodiment.
FIG. 6A is an exploded perspective view illustrating internal components of an electronic device according to various embodiments.
FIG. 6B is a cross-sectional view illustrating internal components of an electronic device according to various embodiments.
FIG. 6C is a plan view illustrating a printed board assembly of an electronic device according to various embodiments.

### [Mode for the Invention]

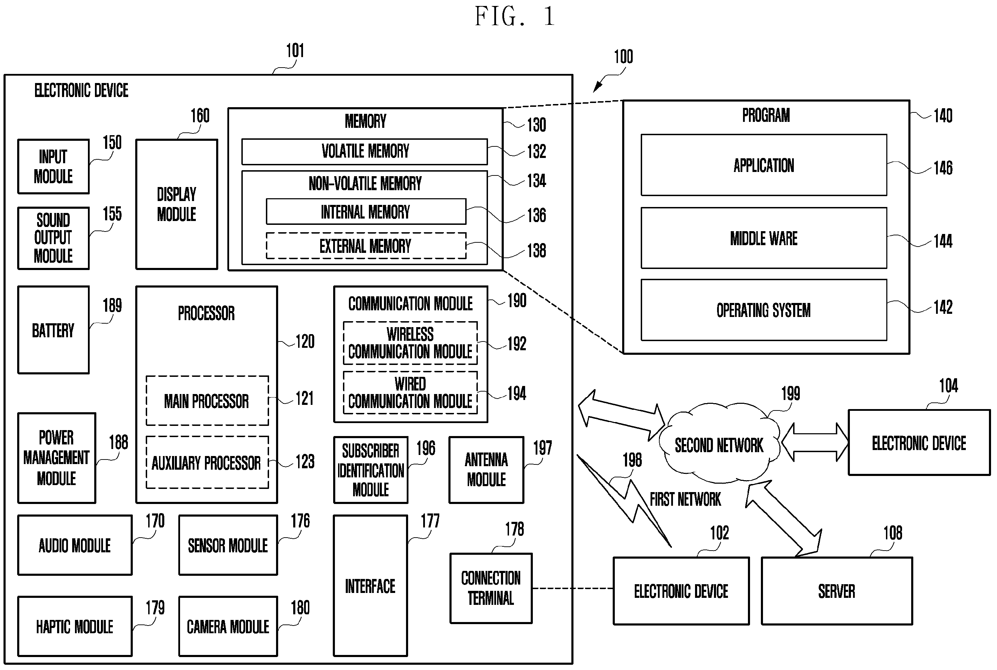

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input 1module 150, a sound output 1module 155, a display 1module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display 1module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input 1module 150 may receive a command or data to be used by another component (e.g., the processor 120) of the electronic device 101, from the outside (e.g., a user) of the electronic device 101. The input 1module 150 may include, for example, a microphone, a mouse, a keyboard, a key (e.g., a button), or a digital pen (e.g., a stylus pen).

The sound output 1module 155 may output sound signals to the outside of the electronic device 101. The sound output 1module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display 1module 160 may visually provide information to the outside (e.g., a user) of the electronic device 101. The display 1module 160 may include, for example, a display, a hologram device, or a projector and control circuitry to control a corresponding one of the display, hologram device, and projector. According to an embodiment, the display 1module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input 1module 150, or output the sound via the sound output 1module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

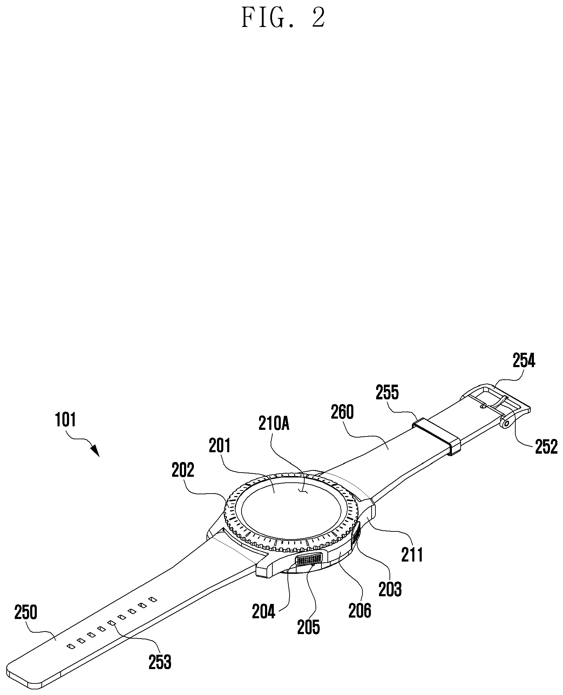

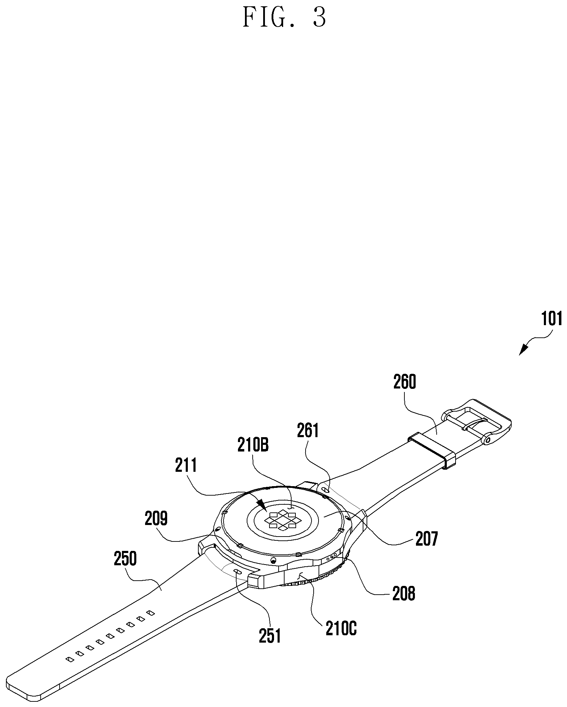

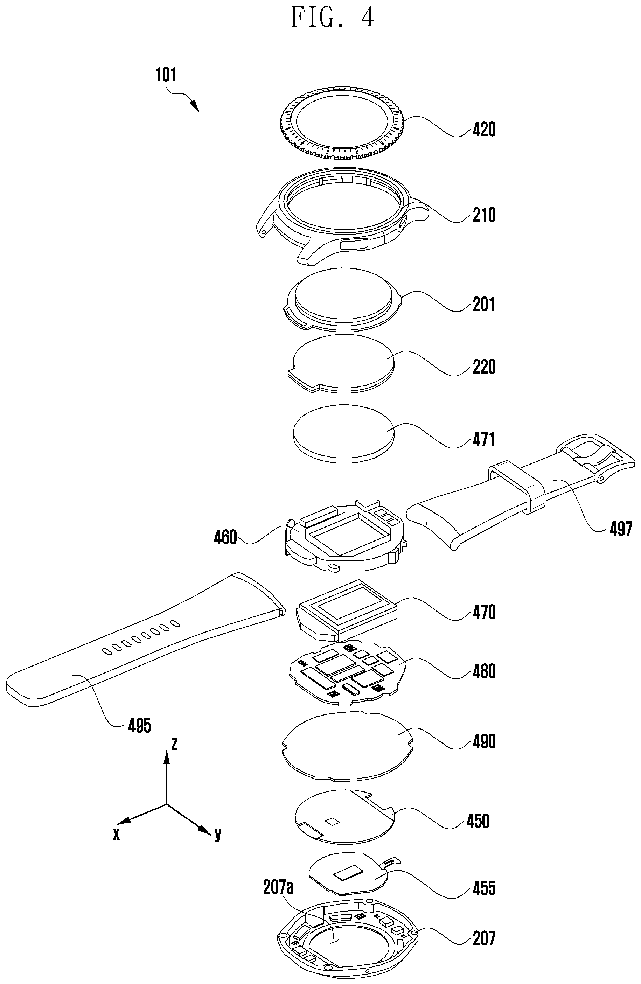

FIG. 2 is a perspective view illustrating a front surface of an electronic device according to an embodiment. FIG. 3 is a perspective view illustrating a rear surface of the electronic device of FIG. 2 according to an embodiment. FIG. 4 is an exploded perspective view illustrating the electronic device of FIG. 2 according to an embodiment.

With reference to FIGS. 2 and 3, the electronic device 101 according to an embodiment may include a housing 210 including a first surface (or front surface) 210A, a second surface (or rear surface) 210B, and a side surface 210C enclosing a space between the first surface 210A and the second surface 210B, and fastening members 250 and 260 connected to at least a part of the housing 210 to detachably fasten the electronic device 101 to a user's body part (e.g., wrists and ankles). The fastening members 250 and 260 may be, for example, a strap that is wound around the user's wrist to fix the electronic device 101. In another embodiment (not illustrated), the housing may refer to a structure forming some of the first surface 210A, the second surface 210B, and the side surface 210C of FIG. 1. According to an embodiment, the first surface 210A may be formed by a front plate 201 (e.g., a glass plate or a polymer plate including various coating layers) whose at least part is substantially transparent. The second surface 210B may be formed by a rear plate 207. The rear plate 207 may be made of, for example, coated or tinted glass, ceramic, polymer, metal (e.g., aluminum, stainless steel (STS), or magnesium), or a combination of at least two of the above materials. The side surface 210C may be formed by a side bezel structure (or "side member") 206 coupled to the front plate 201 and the rear plate 207 and including a metal and/or polymer. In some embodiments, the rear plate 207 and the side bezel structure 206 may be integrally formed and include the same material (e.g., a metal material such as aluminum). The fastening members 250 and 260 may be made of various materials and shapes. Integral and a plurality of unit links may be formed to move each other by a woven material, leather, rubber, synthetic resin, metal, ceramic, or a combination of at least two of the above materials.

According to an embodiment, the electronic device 101 may include at least one of a display 220 (see FIG. 4), audio modules 205 and 208, a sensor module 211, key input devices 202, 203 and 204, and a connector hole 209. In some embodiments, the electronic device 101 may omit at least one (e.g., the key input devices 202, 203, and 204, the connector hole 209, or the sensor module 211) of the components or may additionally include other components.

The display 220 may be visually exposed, for example, through a substantial portion of the front plate 201. The shape of the display 220 may be a shape corresponding to the shape of the front plate 201 and be a circular shape, an elliptical shape, or a polygonal shape. The display 220 may be coupled to or disposed adjacent to a touch sensing circuit, a pressure sensor capable of measuring the intensity (pressure) of a touch, and/or a fingerprint sensor.

The audio modules 205 and 208 may include a microphone hole 205 and a speaker hole 208. A microphone for acquiring external sound may be disposed inside the microphone hole 205, and in some embodiments, a plurality of microphones may be disposed to detect a direction of sound. The speaker hole 208 may be used as an external speaker and a receiver for a call. In some embodiments, the speaker hole 208 and the microphone hole 203 may be implemented into one hole, or a speaker may be included without the speaker hole 208 (e.g., piezo speaker).

The sensor module 211 may generate an electrical signal or data value corresponding to an internal operating state of the electronic device 101 or an external environmental state. The sensor module 211 may include, for example, a biometric sensor module (e.g., HRM sensor, oxygen saturation sensor, and/or blood sugar sensor) disposed toward the second surface 210B of the housing 210. The electronic device 101 may further include a sensor module not illustrated, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, and an illuminance sensor.

The key input devices 202, 203, and 204 may include a wheel key 202 disposed at a first surface 210A of the housing 210 and rotatable in at least one direction, and/or side key buttons 203 and 204 disposed at the side surface 210C of the housing 210. The wheel key 202 may have a shape corresponding to a shape of the front plate 201. In another embodiment, the electronic device 101 may not include some or all of the above-mentioned key input devices 202, 203, and 204, and the key input devices 202, 203, and 204 that are not included may be implemented in the form of a soft key or a touch key on the display 220. The connector hole 209 may include another connector hole (not illustrated) that may receive a connector (e.g., USB connector) for transmitting and receiving power and/or data to and from an external electronic device and that may receive a connector for transmitting and receiving an audio signal to and from an external electronic device. The electronic device 101 may further include, for example, a connector cover (not illustrated) that covers at least a portion of the connector hole 209 and that blocks external foreign substances from entering the connector hole 209.

The fastening members 250 and 260 may be detachably fastened to at least a partial area of the housing 210 using locking members 251 and 261. The fastening members 250 and 260 may include one or more of a fixing member 252, a fixing member fastening hole 253, a band guide member 254, and a band fixing ring 255.

The fixing member 252 may fix the housing 210 and the fastening members 250 and 260 to the user's body part (e.g., wrist or ankle). The fixing member fastening hole 253 may correspond to the fixing member 252 to fix the housing 210 and the fastening members 250 and 260 to the user's body part. The band guide member 254 may limit a movement range of the fixing member 252 when the fixing member 252 is fastened to the fixing member fastening hole 253 so that the fastening members 250 and 260 are tightly fastened to the user's body part. The band fixing ring 255 may limit a movement range of the fastening members 250 and 260 in a state in which the fixing member 252 and the fixing member fastening hole 253 are fastened.

With reference to FIG. 4, the electronic device 101 may include a side bezel structure 206, a wheel key 420, a front plate 201, a display 220, a first antenna 450, a second antenna 455, a support member 460 (e.g., bracket), a battery 470, a printed circuit board 480, a front frame 490, a rear plate 207, and fastening members 495 and 497. The support member 460 may be disposed inside the electronic device 101 to be connected to the side bezel structure 206 or may be integrally formed with the side bezel structure 206. The support member 460 may be made of, for example, a metal material and/or a non-metal (e.g., polymer) material. The support member 460 may have the display 220 coupled to one surface and the printed circuit board 480 coupled to the other surface. A processor (e.g., the processor 120 of FIG. 1) and a memory (e.g., the memory 130 of FIG. 1), and/or an interface (e.g., the interface 177 of FIG. 1) may be mounted in the printed circuit board 480. The processor may include, for example, one or more of a central processer, an application processor, a graphic processer (GPU), a sensor processor, or a communication processor.

The memory may include, for example, a volatile memory or a non-volatile memory. The interface may include, for example, a high definition multimedia interface (HDMI), a universal serial bus (USB) interface, an SD card interface, and/or an audio interface. For example, the interface may electrically or physically connect the electronic device 101 to an external electronic device, and include a USB connector, an SD card/MMC connector, or an audio connector.

The battery 470 (e.g., the battery 189 of FIG. 1) is a device for supplying power to at least one component of the electronic device 101, and may include, for example, a non-rechargeable primary battery, a rechargeable secondary battery, or a fuel cell. At least a portion of the battery 470 may be, for example, disposed on substantially the same plane as that of the printed circuit board 480. The battery 470 may be integrally disposed inside the electronic device 101 or may be disposed detachably from the electronic device 101.

The first antenna 450 may overlap the second antenna 455 and be disposed between the printed circuit board 480 and the rear plate 207. The first antenna 450 may include, for example, a near field communication (NFC) antenna, a wireless charging antenna, and/or a magnetic secure transmission (MST) antenna. The first antenna 450 may, for example, perform short-range communication with an external device, wirelessly transmit and receive power required for charging, and transmit a short-range communication signal or a magnetic-based signal including payment data. In another embodiment, an antenna structure may be formed by a part of the side bezel structure 206 and/or the support member 460 or a combination thereof. In another embodiment, the first antenna 450 may be disposed on the circuit board 480 in the form of a chip antenna.

The second antenna 455 may be disposed between the printed circuit board 480 and the rear plate 207. The second antenna 455 may include, for example, a near field communication (NFC) antenna, a wireless charging antenna, and/or a magnetic secure transmission (MST) antenna. The second antenna 455 may, for example, perform short-range communication with an external device, wirelessly transmit and receive power required for charging, and transmit a short-range communication signal or a magnetic-based signal including payment data. In another embodiment, an antenna structure may be formed by a part of the side bezel structure 206 and/or the rear plate 207 or a combination thereof.

The biometric sensor module 211 may be disposed adjacent to the rear plate 207 to face the wearer's body at the rear plate 207. The biometric sensor module 211 may transmit signals of various wavelength bands to the wearer's body and measure various pieces of biometric information (e.g., heartbeat, blood sugar and/or oxygen saturation) from signals of the wavelength band reflected, scattered, and/or absorbed from the user's body. The rear plate 207 may include a rear window 207a through which the above-described signals are transmitted to or from the user's body.

The front frame 490 may be disposed to face one surface of the printed circuit board 480 to support the printed circuit board 480 inside the electronic device 101.

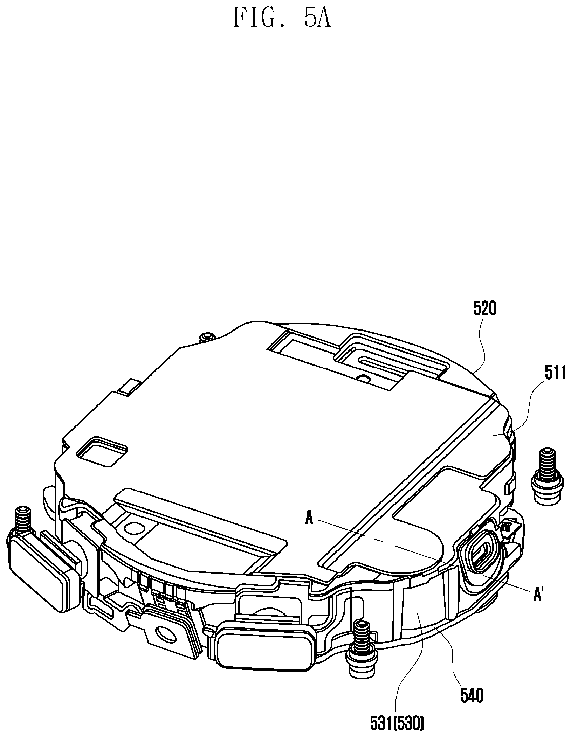

FIG. 5A is a perspective view illustrating internal components of an electronic device according to various embodiments of the disclosure.

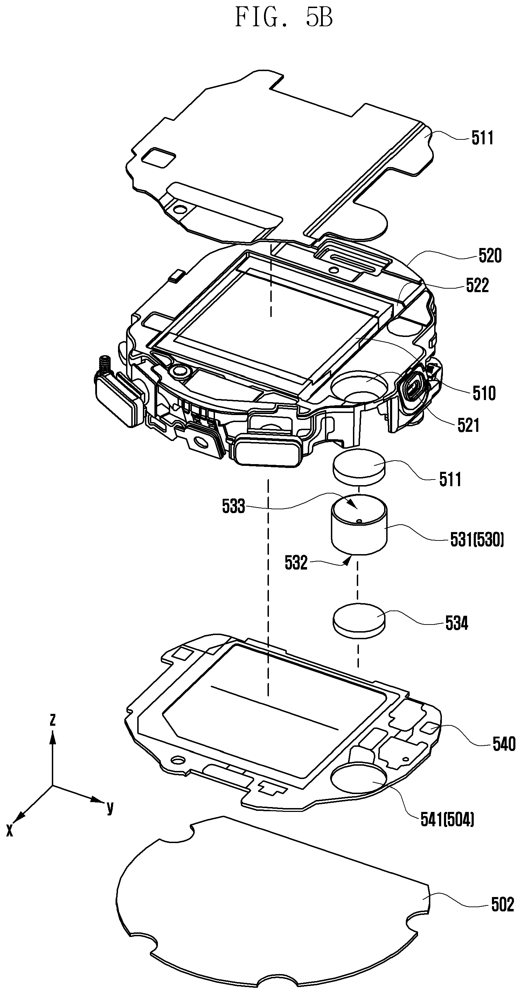

FIG. 5B is an exploded perspective view illustrating internal components of an electronic device according to various embodiments.

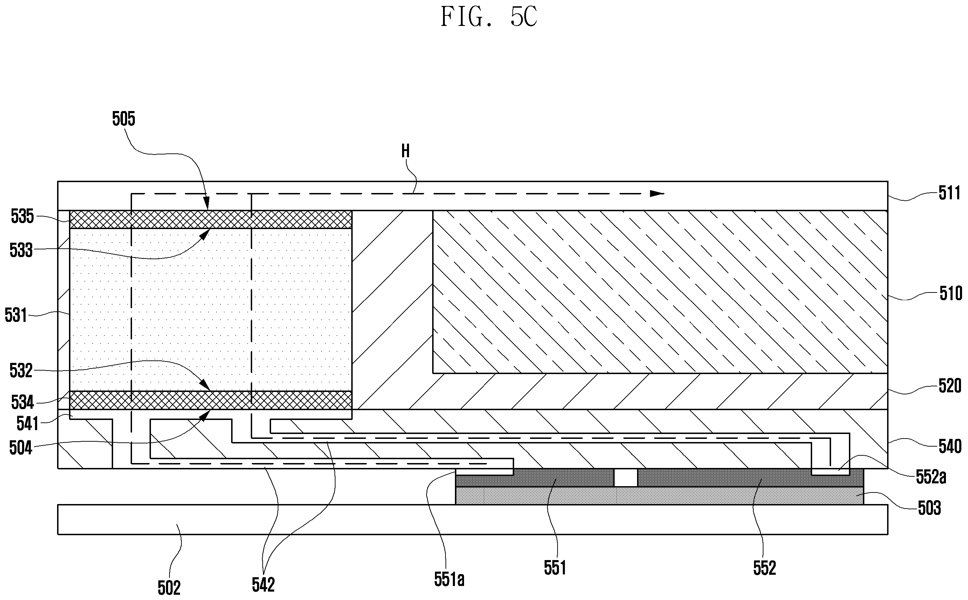

FIG. 5C is a cross-sectional view illustrating internal components of an electronic device according to various embodiments.

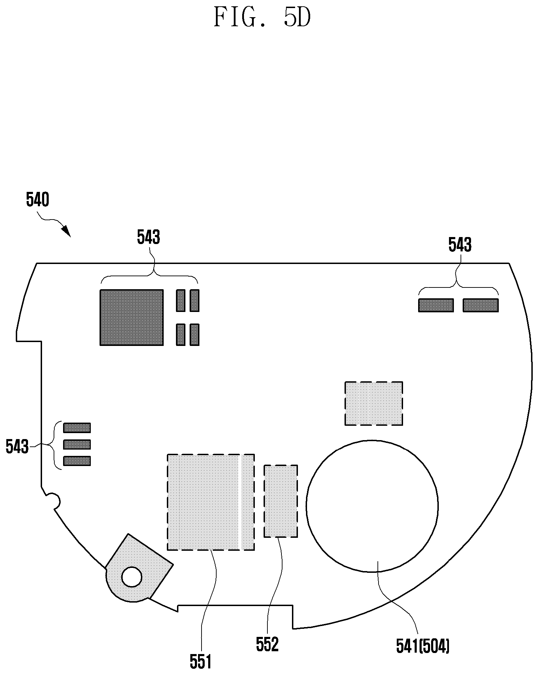

FIG. 5D is a top plan view illustrating a printed board assembly 540 of an electronic device according to various embodiments.

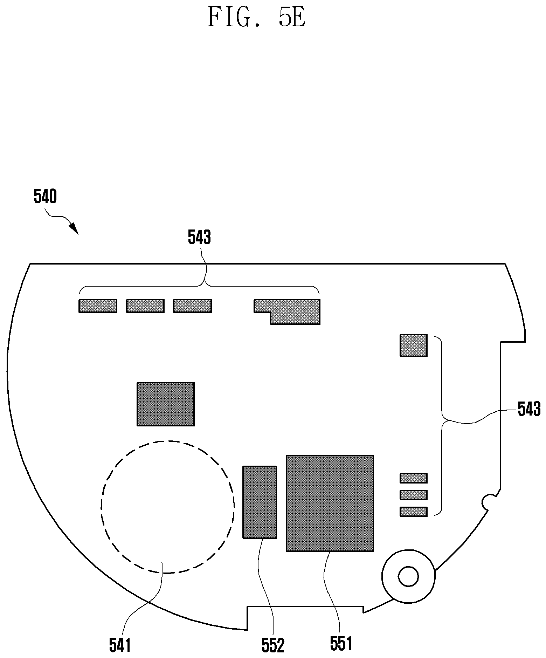

FIG. 5E is a bottom plan view illustrating a printed board assembly 540 of an electronic device according to various embodiments.

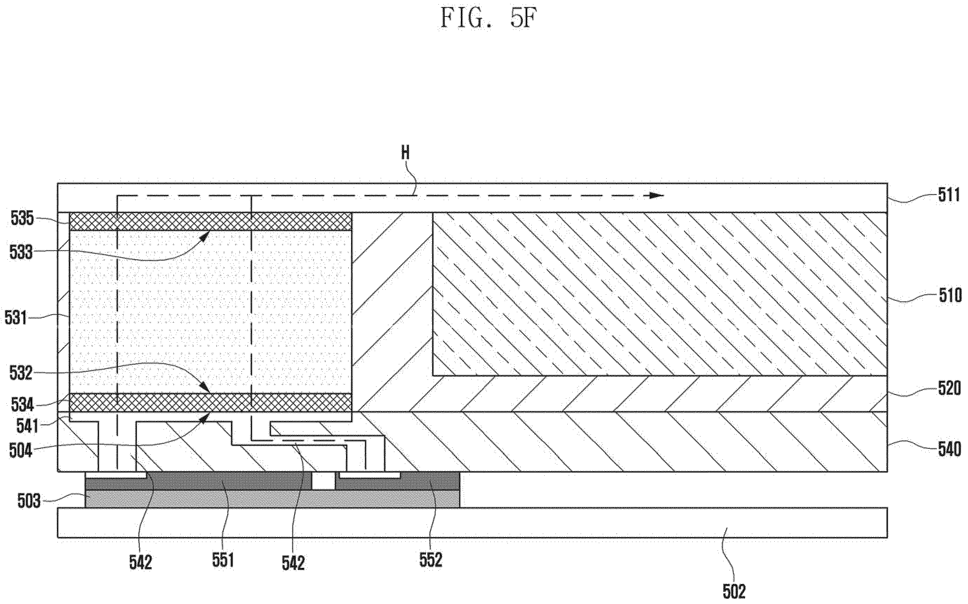

FIG. 5F is a cross-sectional view illustrating internal components of an electronic device according to an embodiment.

Cross sections of FIGS. 5C and 5F are cross sections in an A-A' direction of FIG. 5A.

FIG. 5E is a plan view illustrating an opposite surface of a surface illustrated in FIG. 5D.

With reference to FIGS. 5A to 5C, the electronic device (e.g., the electronic device 101 of FIGS. 2 to 4) may include a battery 510 (e.g., the battery 470 of FIG. 4), a battery support frame 511, a bracket 520 (e.g., the support member 460 of FIG. 4), a motor 530, and a printed board assembly 540 as an internal component.

The bracket 520 may include a mount space (e.g., a motor mount space 521, a battery mount space 522) formed to mount various internal components of the electronic device such as the battery 510 and the motor 530 inside the electronic device and be a member that protects internal components from risk factors such as an external force, deformation, and collision. In various embodiments, the bracket 520 may include a non-conductive material, for example, various polymer materials such as nylon, high density polyethylene (HDPE), polypropylene (PP), or polycarbonate (PC).

The printed board assembly 540 (PBA) may include at least one printed circuit board (e.g., the printed circuit board 480 of FIG. 4) and be a portion where various electrical components of the electronic device are disposed. The printed circuit board may be a single-layer board or a multi-layer laminated board. At least one heat generating element 551 or 552 is disposed on the PBA 540. The heat generating elements 551 and 552 may include components that generate a heat by consuming power during operation of the electronic device, for example, an AP (e.g., the processor 120 of FIG. 1), a PMIC, MMPA, or various active elements or integrated circuits similar thereto. The heat generating element may include ground electrodes 551a and 552a (e.g., ground pin, ground solder ball, and/or ground land) for grounding the same for an electrical operation thereof. FIGS. 5C to 5E illustrate that the heat generating elements 551 and 552 are disposed on either surface of the PBA 540, but this is an example that does not limit the disclosure, and it will be apparent to those skilled in the art that the heat generating elements 551 and 552 may be disposed on one surface or both surfaces of the PBA 540 as long as they do not contradict in a description of various embodiments below.

The battery 510 (e.g., the battery 470 of FIG. 4) is a device disposed inside the electronic device to supply power to at least one component and may include a rechargeable secondary battery, for example, a lithium ion battery, lithium polymer battery, or the like. The battery support frame 511 is a member that supports the battery 510 inside the electronic device and that protects the battery 510 from an impact and external force. The battery support frame 511 may include a metal material having good rigidity and thermal conductivity, for example, stainless steel. The battery support frame 511 may be coupled to the bracket 520 to fix the battery 510 to the bracket 520.

The motor 530 is a part that is disposed inside the electronic device and that is rotated by electric power to generate a vibration to the electronic device, thereby transferring tactile information to the user or providing tactile feedback. In various embodiments, the motor 530 includes a motor housing 531 that protects internal components thereof. A material of the motor housing 531 may include a metal material having good strength and thermal conductivity, for example, aluminum, stainless steel, and/or various copper alloys. In various embodiments, the motor 530 may be disposed between the PBA 540 and the battery support frame 511. The motor 530 may be partially or completely disposed between the PBA 540 and the battery support frame 511. In various embodiments, the motor housing 531 may include a first surface 532 that directly or indirectly contacts the PBA 540 and a second surface 533 that directly or indirectly contacts the battery support frame 511. In other words, the first surface 210A, 532 of the motor housing 531 is in direct (e.g. at least heat-conductive) contact or indirect (e.g. at least heat-conductive) contact (e.g. via the heat transfer member 502 or the first thermal interface 534) with the printed board assembly 540. Thus, being configured to receive a heat of the heat generating element 551 from the printed board assembly. Futher, the second surface 210B, 533 is in direct (e.g. at least heat-conductive) contact or indirect (e.g. at least heat-conductive) contact (e.g. via second thermal interface 535) with the battery support frame 511. Thus, being configured to transfer a heat of the heat generating element to the battery support frame 511.

In an embodiment, the electronic device may further include a heat transfer member 502. The heat transfer member 502 may be a member that assists in dissipating a heat of the heat generating elements 551 and 552 and ultimately dissipating a heat to the outside of the electronic device. In other words, employing the heat transfer member 502 and the battery support frame 511 has the advantage that the heat generated by the heat generating elements 551 and 552 can be dissipated on both sides of the electric device, thus preventing malfunction and damage of the electronic device and further increasing performance capacity of the active elements thereof. In some embodiments, the heat transfer member 502 may be a front frame (e.g., the front frame 490 of FIG. 4) of the electronic device. In some embodiments, the heat transfer member 502 may be disposed to indirectly contact by a thermal interface material (TIM) 503.

With reference to FIGS. 5C to 5E, the electronic device according to various embodiments may include a first heat transfer surface 504. The first heat transfer surface 504 may be positioned on a heat transfer path H through which a heat generated in the heat generating elements 551 and 552 is transferred. The first heat transfer surface 504 may be a surface that transfers a heat of the heat generating elements 551 and 552 to the first surface 532 of the motor housing 531.

With reference to FIG. 5C, in various embodiments, the first heat transfer surface 504 may be formed on a surface of the PBA 540. The first heat transfer surface 504 may be formed on an area of the PBA 540 in contact with the first surface 532 of the motor housing 531. In an embodiment, the first surface 532 of the motor housing 531 may directly contact the first heat transfer surface 504 to receive a heat from the first heat transfer surface 504, but in other embodiments, the first surface 532 of the motor housing 531 may indirectly contact the first heat transfer surface 504 by a first thermal interface 534. The first thermal interface 534 may include a thermally conductive material and may be a member that is disposed between the first surface 532 of the motor housing 531 and the first heat transfer surface 504 and that improves heat transfer efficiency by reducing thermal resistance between the first heat transfer surface 504 and the first surface 532 of the motor housing 531. In various embodiments, the first thermal interface 534 may include a thermal pad, thermal tape, and a conductive or non-conductive thermal paste. In various embodiments, the thermally conductive material may include a material having a high heat transfer coefficient, such as graphite sheet, carbon fiber, metal powder, liquid or semi-liquid metal, and/or powdered diamond. In some embodiments, the thermally conductive material of the first thermal interface 534 may include a flexible material, such as a silicone binder. Because the first thermal interface 534 includes a flexible material, the first thermal interface 534 may reduce a problem such as noise, damage, malfunction due to a collision between the motor housing 531 and the PBA 540 as the motor 530 vibrates and an increase in thermal resistance due to lifting between the first surface 532 and the first heat transfer surfaces 504. In various embodiments, the first thermal interface 534 may be a thermal tape having an adhesive on both surfaces to bond between the first surface 532 and the first heat transfer surface 504. The thermal tape may fix the motor 530 inside the electronic device. The thermal tape may at least partially replace a fixing member such as a double-sided tape used for fixing the motor 530 and increase adhesion between the first heat transfer surface 504 and the first surface 532 of the motor housing 531.

With reference to again FIGS. 5A and 5C, the electronic device according to various embodiments may include a second heat transfer surface 505. The second heat transfer surface 505 may be a surface positioned on a heat transfer path H that distributes a heat received by the motor housing 531 to the inside of the electronic device and that ultimately dissipates the heat to the outside of the electronic device.

With reference to FIGS. 5A and 5C, in various embodiments, the second heat transfer surface 505 may be formed on a surface of the battery support frame 511. The second heat transfer surface 505 may be formed in an area in contact with the second surface 533 of the motor housing 531 in the battery support frame 511. In an embodiment, the second surface 533 of the motor housing 531 may directly contact the second heat transfer surface 505 to receive a heat from the second heat transfer surface 505, but in other embodiments, the second surface 533 of the motor housing 531 may indirectly contact the second heat transfer surface 505 by a second thermal interface 535. The second thermal interface 535 may be a member including a thermally conductive material and disposed between the second surface 533 of the motor housing 531 and the second heat transfer surface 505 to improve heat transfer efficiency by reducing thermal resistance between the second heat transfer surface 505 and the second surfaces 533 of the motor housing 531. In various embodiments, the second thermal interface 535 may include elements such as a thermal pad, thermal tape, and/or conductive or non-conductive thermal paste. The thermally conductive material may include, for example, a material having a high thermal conductivity, such as graphite sheet, carbon fiber, metal powder, liquid or semi-liquid metal, and/or powdered diamond. In some embodiments, a thermally conductive material of the second thermal interface 535 may include a flexible material, such as a silicone binder. Because the second thermal interface 535 includes a flexible material, the second thermal interface 535 may reduce a problem such as noise, damage, and malfunction due to a collision between the motor housing 531 and the battery support frame 511 as the motor 530 vibrates and an increase in thermal resistance due to lifting between the second surface 533 and the second heat transfer surface 505. In various embodiments, the second thermal interface 535 is a thermal tape with adhesive on both surfaces, which may bond between the second surface 533 and the second heat transfer surface 505. The thermal tape may fix the motor 530 inside the electronic device. The thermal tape may at least partially replace a fixing member such as a double-sided tape used for fixing the motor 530, and increase adhesion of the second heat transfer surface 505 and the second surface 533 of the motor housing 531.

With reference to FIG. 5D, the PBA 540 may include a ground pad 541 and at least one ground wire 542 formed on an area thereof. The ground pad 541 may directly or indirectly contact the first surface 532 of the motor housing 531. A surface of the ground pad 541 in contact with the first surface 532 of the motor housing 531 may be the first heat transfer surface 504. The ground pad 541 may be a planar metal pattern printed on a surface of the printed circuit board. In some embodiments, a shape of the ground pad 541 may be substantially the same as that of the first surface 532 of the motor housing 531. The ground wire 542 may be an electric wire having one end electrically connected to the ground pad 541 and the other end electrically connected to the ground electrodes 551a and 551b of the heat generating elements 551 and 552. In an embodiment, the ground wire 542 may be a metal pattern printed on a surface of the printed circuit board of the PBA 540 or inside the laminated printed circuit board. The ground wire 542 may connect the heat generating elements 551 and 552 and the ground pad 541 to each other; thus, the ground wire 542 may form a part of the heat transfer path H to effectively transfer a heat of the heat generating element to the first heat transfer surface 504 and the motor housing 531. This has the advantage, that besides an grounding effect of the elements, an effective heat transfer may also be achieved, when the heat generating elements 551 and 552 are positioned further away from the motor housing 531 due to potential structural necessities.

With reference to again FIGS. 5D and 5E, the heat generating elements 551 and 552 may be disposed adjacent to an area in contact with the first surface 532 of the motor housing 531 in the PBA 540, for example, to the first heat transfer surface 504 to the ground pad 541. For example, the heat generating elements 551 and 552 may be disposed closer to the first heat transfer surface 504 or the ground pad 541 than other electrical components 543 disposed on the PBA 540. The other electrical components 543 may include, for example, passive elements such as resistors, capacitors, and inductors or various active elements having a lower heat generation amount during operation than that of the heat generating elements 551 and 552. As described above, because the heat generating elements 551 and 552 are disposed adjacent to the motor housing 531 in the PBA 540, a heat transfer path from the heat generating elements 551 and 552 to the motor housing 531 is shortened and thermal resistance is reduced; thus, while increasing heat dissipation efficiency of the electronic device and maintaining a temperature of the heat generating elements 551 and 552 to be lower or minimizing the temperature increase, a performance of the heat generating elements 551 and 552 may be increased.

With reference to FIG. 5F, in an embodiment, the heat generating elements 551 and 552 may be disposed to at least partially overlap an area of the PBA 540 facing the first surface 532 of the motor housing 531. For example, the heat generating elements 551 and 552 may be disposed at one surface of the PBA 540, the ground pad 541 may be disposed at the other surface thereof, but the heat generating elements 551 and 552 and the ground pad 541 may be disposed to at least partially overlap. Because a heat transfer path between the heat generating elements 551 and 552 and the ground pad 541 is shortened through the overlapping disposition, as described above, thermal resistance may be reduced; thus, heat dissipation efficiency of the electronic device is increased and a performance of the heat generating elements 551 and 552 may be increased while maintaining a temperature of the heat generating elements 551 and 552 to be lower or minimizing temperature increase. For other components of FIG. 5F, reference may be made to the description of FIGS. 5A to 5E as long as they do not contradict, and unless the technical features described with reference to FIGS. 5A to 5E do not contradict, it may be apparent to those skilled in the art that the technical features may be combined with the features of FIG. 5F.

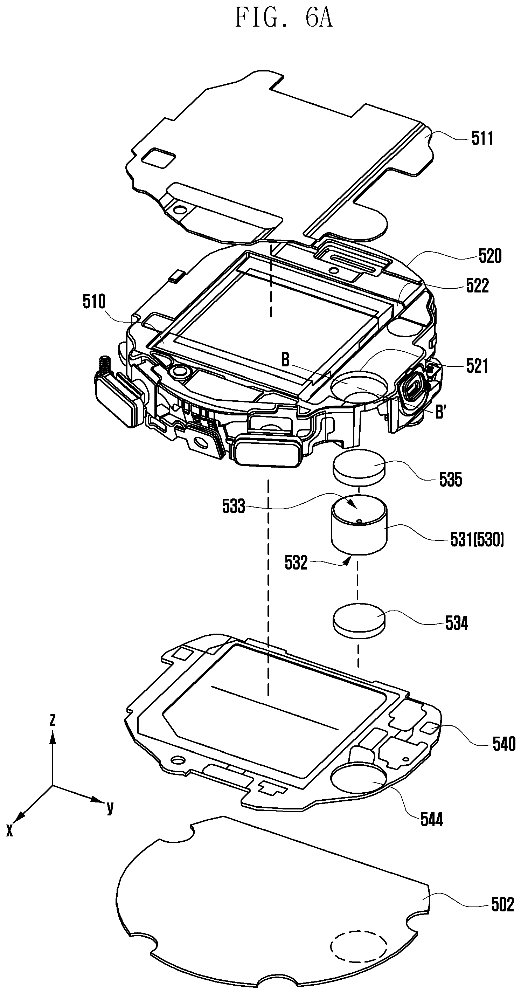

FIG. 6A is an exploded perspective view illustrating internal components of an electronic device according to various embodiments.

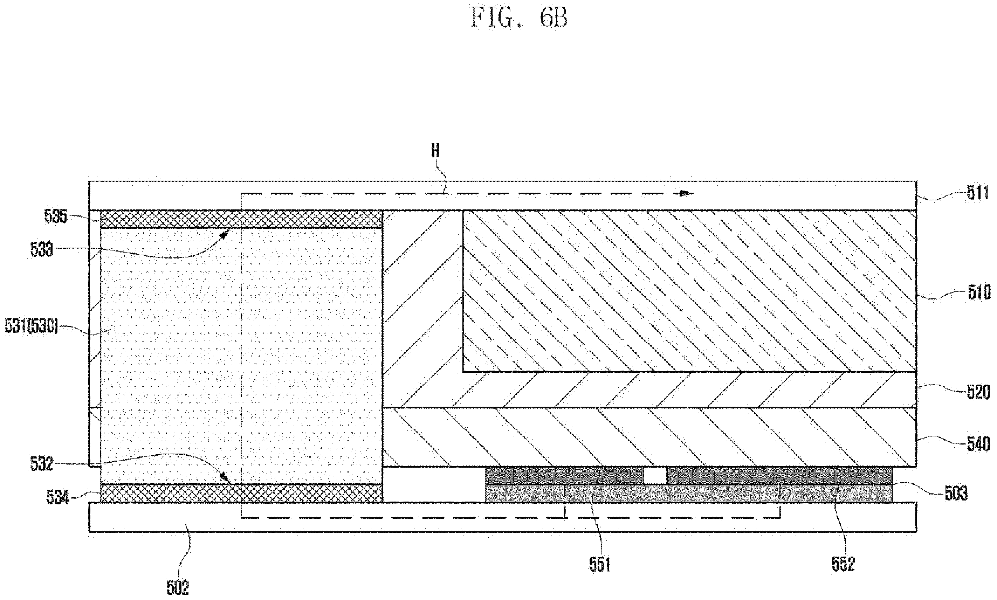

FIG. 6B is a cross-sectional view illustrating internal components of an electronic device according to various embodiments.

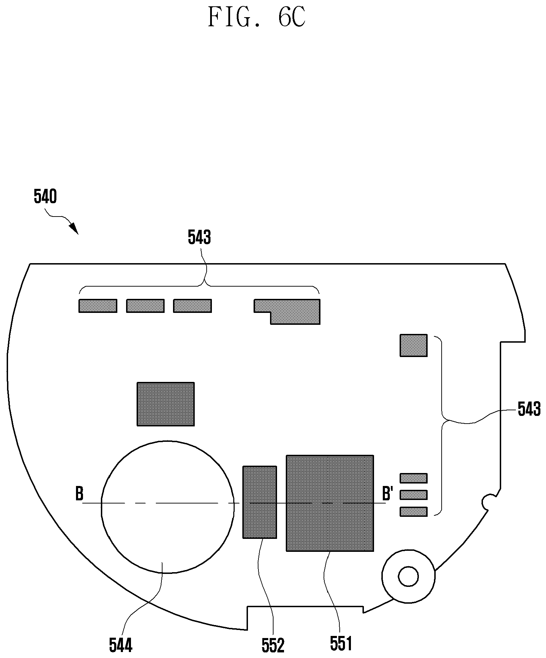

FIG. 6C is a plan view illustrating a PBA 540 of an electronic device according to various embodiments.

A cross section of FIG. 6B is a cross section in a B-B' direction of FIGS. 6A and 6C.

With reference to FIGS. 6A to 6C, an electronic device according to various embodiments may include a heat transfer member 502. The heat transfer member 502 may be a member disposed at one surface of the PBA 540 to receive a heat from the heat generating elements 551 and 552 and to move and disperse the heat. The heat transfer member 502 may include a metal material having good thermal conductivity, such as aluminum or stainless steel. The heat transfer member 502 may directly contact the heat generating elements 551 and 552 or indirectly contact the heat generating elements 551 and 552 with a thermal interface material (TIM) interposed therebetween.

The motor 530 may be disposed between the heat transfer member 502 and the battery support frame 511. The first surface 532 of the motor housing 531 may directly or indirectly contact the heat transfer member 502. The second surface 533 of the motor housing 531 may directly or indirectly contact the battery support frame 511.

The first heat transfer surface 504 may be positioned on an area of the heat transfer member 502 in contact with the first surface 532 of the motor housing 531. The first thermal interface 534 including a thermally conductive material, such as a thermal pad or thermal tape, and/or conductive or non-conductive thermal paste may be positioned between the first heat transfer surface 504 and the first surface 532 of the motor housing 531. The second heat transfer surface 505 may be positioned on an area of the battery support frame 511 in contact with the second surface 533 of the motor housing 531. A second thermal interface 535 including a thermally conductive material, such as a thermal pad or a thermal tape, a conductive or non-conductive thermal interface material (TIM) may be positioned between the second heat transfer surface 505 and the second surface 533 of the motor housing 531. The first thermal interface 534 and the second thermal interface 535 may include a flexible material.

With reference to FIG. 6B, a heat generated in the heat generating elements 551 and 552 may be transferred to the heat transfer member 502 and be transferred to the first surface 532 of the motor housing 531 through the first heat transfer surface 504 of the heat transfer member 502 and be transferred from the second surface 533 of the housing to the battery support frame 511 through the second heat transfer surface 505 to be dispersed and dissipated. Because the heat transfer member 502 includes a material having good thermal conductivity, for example, a metal material, the heat transfer member 502 may effectively transfer a heat of the heat generating elements 551 and 552 to the motor housing 531.

With reference to again FIGS. 6A and 6C, in some embodiments, the PBA 540 may include a through hole 544 penetrating the PBA 540 in one area. The motor 530 may be disposed to penetrate the PBA 540 through the through hole 544. A shape of the through hole 544 may be substantially the same as a cross-sectional shape of the motor 530 penetrating the through hole 544. The motor 530 is disposed to penetrate the PBA 540 through the through hole 544; thus, the motor 530 may contact each of the heat transfer member 502 positioned in a first direction (e.g., -z direction) of the PBA 540 and the battery support frame 511 positioned in a second direction (e.g., the z direction) of the PBA 540 to transfer a heat.

With reference to again FIG. 6C, the heat generating elements 551 and 552 may be disposed adjacent to the through hole 544 in the PBA 540. For example, the heat generating elements 551 and 552 may be disposed closer to the through hole 544 than other electrical components 543 disposed at the PBA 540. The other electrical components 543 may include, for example, passive elements such as resistors, capacitors, and chip inductors, or various active elements having a lower heat generation amount than the heat generating elements 551 and 552 during operation. As described above, because the heat generating elements 551 and 552 are disposed adjacent to the through hole 544 in the PBA 540, a heat transfer path from the heat generating elements 551 and 552 to the motor housing 531 is shortened and thermal resistance is reduced; thus, while increasing heat dissipation efficiency of the electronic device and maintaining a temperature of the heat generating elements 551 and 552 to be low, or minimizing a temperature increase, a performance of the heat generating elements 551 and 552 may be increased.

Further, for other components illustrated in FIGS. 6A to 6C, reference may be made to the description of FIGS. 5A to 5E as long as they do not contradict, and unless the technical features described with reference to FIGS. 5A to 5E do not contradict, it will be apparent to those skilled in the art that the technical features may be combined with the features of FIGS. 6A to 6C.

An electronic device according to various embodiments of the disclosure including at least one heat generating element 551 and 552 may include a PBA 540 on which the heat generating elements 551 and 552 are disposed, a battery 510, a battery support frame 511 for supporting the battery 510 therein, and a motor 530 disposed between the PBA 540 and the battery support frame 511. The motor 530 may include a motor housing 531 including a first surface 532 that directly or indirectly contacts the PBA 540 and that receives a heat of the heat generating elements 551 and 552 from the PBA 540 and a second surface 533 that directly or indirectly contacts the battery support frame 511 and that transfers a heat of the heat generating elements 551 and 552 to the battery support frame 511.

In various embodiments, the electronic device may include a first thermal interface 534 disposed between the first surface 532 of the motor 530 and the PBA 540 and including a thermally conductive material.

In various embodiments, the thermally conductive material may include a flexible material.

In various embodiments, the electronic device may include a second thermal interface 535 disposed between the second surface 533 of the motor 530 and the battery support frame 511 and including a thermally conductive material.

In various embodiments, the thermally conductive material may include a flexible material.

In various embodiments, the PBA 540 may include a heat transfer surface formed in an area facing the first surface 532 of the motor 530.

In various embodiments, the heat generating elements 551 and 552 may include at least one ground electrode 551a and 551b, and the heat transfer surface may be electrically connected to the ground electrodes 551a and 551b of the heat generating elements 551 and 552.

In various embodiments, the PBA 540 may further include an electrical component with a lower heat generation amount than that of the heat generating elements 551 and 552, and the heat generating elements 551 and 552 may be disposed closer to an area of the PBA 540 in contact with the first surface of the motor housing 531 than the electric component.

In various embodiments, the heat generating elements 551 and 552 may be disposed to at least partially overlap an area of the PBA 540 facing the first surface of the motor 530.

An electronic device according to various embodiments of the disclosure including at least one heat generating element 551 and 552 may include a PBA 540 on which the heat generating elements 551 and 552 are disposed, a heat transfer member in contact with an area of the PBA 540 in which the heat generating elements 551 and 552 are disposed, a battery 510 disposed inside the electronic device, a battery support frame supporting for the battery 510 inside the electronic device, and a motor 530 disposed between the heat transfer member and the battery support frame 511. The motor 530 may include a motor housing 531 including a first surface 532 that directly or indirectly contacts the heat transfer member and that receives a heat of the heat generating elements 551 and 552 from the PBA 540 and a second surface 533 that directly or indirectly contacts the battery support frame 511 and that transfers a heat of the heat generating elements 551 and 552 to the battery support frame 511.

In various embodiments, the electronic device may include a first thermal interface 534 disposed between the first surface 532 of the motor 530 and the heat transfer member and including a thermally conductive material.

In various embodiments, the thermally conductive material may include a flexible material.

In various embodiments, the electronic device may include a second thermal interface 535 disposed between the second surface 533 of the motor 530 and the battery support frame 511 and including a thermally conductive material.

In various embodiments, the thermally conductive material may include a flexible material.

In various embodiments, the PBA 540 may be disposed to face the heat transfer member at one surface and to face the battery support frame 511 at the other surface, the PBA 540 may include a through hole 544 formed in at least a partial area thereof, and the motor housing 531 may penetrate the through hole 544 to be disposed to directly or indirectly contact the heat transfer member and the battery support frame 511.

In various embodiments, the PBA 540 may further include an electrical component with a lower heat generation amount than that of the heat generating elements 551 and 552, and the heat generating elements 551 and 552 may be disposed closer to the through hole 544 in which the motor 530 is disposed than the electrical component.

An electronic device according to various embodiments of the disclosure including heat generating elements 551 and 552 may include a heat transfer surface positioned on a heat transfer path H through which a heat is dissipated from the heat generating elements 551 and 552, a motor 530 including a motor housing 531 including a first surface 532 directly or indirectly in contact with the heat transfer surface and a second surface 533 positioned in an direction opposite to that of the first surface 532, and a second heat transfer surface directly or indirectly in contact with the second surface 533. The motor housing 531 may receive a heat of the heat generating elements 551 and 552 from the first heat transfer surface to the first surface 532, and transfer a heat of the heat generating elements 551 and 552 to the second heat transfer surface through the second surface 533.

In various embodiments, the electronic device may include a first thermal interface 534 disposed between the first surface 532 of the motor 530 and the first heat transfer surface and including a thermally conductive material.

In various embodiments, the thermally conductive material may include a flexible material.

In various embodiments, the electronic device may include a second thermal interface 535 disposed between the second surface 533 of the motor 530 and the second heat transfer surface and including a thermally conductive material.

According to an aspect of the disclosure electronic, the electronic device 101, 102, 104 comprises at least one heat generating element 551. The electronic device 101, 102, 104 further comprises a printed board assembly on which the heat generating element is disposed, a battery 189, 470, 510, a battery support frame 511 configured to support the battery 189, 470, 510 therein and a motor 530. The motor 530 may be disposed between the printed board assembly 540 and the battery support frame 511. Further, the motor 530 comprises a motor housing 531. The motor 530 (including the motor housing) may be partially or completely disposed between the printed board assembly 540 and the battery support frame 511. The motor housing 531 includes a first surface 210A, 532 configured to directly or indirectly contact the printed board assembly 540 and to receive a heat of the heat generating element 551 from the printed board assembly. In other words, the first surface 210A, 532 of the motor housing 531 is in direct (at least heat-conductive) contact or indirect (at least heat-conductive) contact (e.g. via the heat transfer member 502 or the first thermal interface 534) with the printed board assembly 540. Thus, being configured to receive a heat of the heat generating element 551 from the printed board assembly. The motor housing 531 further includes and a second surface 210B, 533 configured to directly or indirectly contact the battery support frame 511 and to transfer a heat of the heat generating element to the battery support frame 511. In other words, the second surface 210B, 533 is in direct (at least heat-conductive) contact or indirect (at least heat-conductive) contact (e.g. via second thermal interface 535) with the battery support frame 511. Thus, being configured to transfer a heat of the heat generating element to the battery support frame 511.

The above-said electronic device may further comprise a heat transfer member 502 configured to contact an area of the printed board assembly on which the heat generating element is disposed, wherein the motor 530 may be disposed between the heat transfer member 502 and the battery support frame 511. For example, the motor 530 may be completely disposed between the heat transfer member 502 and the battery support frame 511. Further, the first surface 210A, 532 of the motor housing 331 may be configured to directly contact the printed board assembly and to indirectly contact the heat transfer member 502, or to indirectly contact the printed board assembly and to directly contact the heat transfer member 502 in order to receive a heat of the heat generating element from the printed board assembly. Employing the heat transfer member 502 and the battery support frame 511 has the advantage that the heat generated by the heat generating elements 551 and 552 can be dissipated on both sides of the electric device, thus preventing malfunction and damage of the electronic device and further increasing performance capacity of the active elements thereof.

In another embodiment, the electronic device may further comprise a first thermal interface 534 including a thermally conductive material. Said first thermal interface 534 may be disposed between the first surface 210A, 532 of the motor housing 531 and the printed board assembly or may be disposed between the first surface 210A, 532 of the motor housing 531 and the heat transfer member 502. The first thermal interface 534 improves heat transfer efficiency by reducing thermal resistance between the first surface 532 of the motor housing 531 and the printed board assembly or the heat transfer member.

In another embodiment, the electronic device may further comprise a second thermal interface 535 disposed between the second surface 210B, 533 of the motor housing 531 and the battery support frame 511 and including a thermally conductive material.

The thermally conductive material of the aforesaid embodiments may comprise a flexible material. A flexible material has the advantage of reducing noise, as well as preventing damage or malfunction due to a collision between the motor housing 531 and the printed board assembly 540 as the motor 530 vibrates. Further, it may prevent an increase in thermal resistance due to lifting between the first surface 532 and the first heat transfer surfaces 504.

In yet another embodiment of the electronic device, the printed board assembly may comprise a heat transfer surface formed in an area facing the first surface 210A, 532 of the motor housing 531. In this embodiment, the heat generating element (551) may comprise at least one ground electrode 551a, and the heat transfer surface is electrically connected to the ground electrode of the heat generating element. This has the advantage of reducing thermal resistance, while grounding the elements.

Preferably, the printed board assembly 540 may include a ground pad 541 and at least one ground wire 542 formed on an area thereof, wherein the ground pad 541 directly or indirectly contacts the first surface 532 of the motor housing 531 forming the heat transfer surface 504, and the ground wire 542 having one end electrically connected to the ground pad 541 and the other end electrically connected to the ground electrode 551a of the heat generating elements 551. This has the advantage, that in addition to the grounding effect of the elements, an effective heat transfer may also be achieved, when the heat generating elements 551 and 552 are positioned further away from the motor housing 531 due to potential structural necessities.

In another embodiment of the electronic device, the printed board assembly may further comprise an electrical component with a lower heat generation amount than that of the heat generating element, wherein the heat generating element may be disposed closer to an area of the printed board assembly in contact with the first surface 210A, 532 of the motor housing 531 than the electrical component. In other words, because the heat generating elements 551 and 552 are disposed adjacent (i.e. closer) to the motor housing 531 in the printed board assembly 540 than the other electrical components, a heat transfer path from the heat generating elements 551 and 552 to the motor housing 531 is shortened and thermal resistance is reduced; thus, while increasing heat dissipation efficiency of the electronic device and maintaining a temperature of the heat generating elements 551 and 552 to be lower or minimizing the temperature increase, a performance of the heat generating elements 551 and 552 may be increased.

In another embodiment of the electronic device, the heat generating element may be disposed to at least partially overlap an area of the printed board assembly facing the first surface 210A, 532 of the motor housing 531. Because a heat transfer path between the heat generating elements 551 and 552 and first surface 210A, 532 of the motor housing 531 is shortened through the overlapping disposition, as described above, thermal resistance may be reduced; thus, heat dissipation efficiency of the electronic device is increased and a performance of the heat generating elements 551 and 552 may be increased while maintaining a temperature of the heat generating elements 551 and 552 to be lower or minimizing temperature increase.

In another embodiment of the electronic device, the printed board assembly may be disposed to face the heat transfer member 502 at one surface and to face the battery support frame (511) at the other surface. Here, the printed board assembly may comprise a through hole 544 formed in at least a partial area thereof. The motor housing 531 may be disposed to directly or indirectly contact the heat transfer member 502 and the battery support frame 511 through the through hole 544. Further, the printed board assembly may comprise an electrical component with a lower heat generation amount than that of the heat generating element, and the heat generating element may be disposed closer to the through hole 544 in which the motor 530 is disposed than the electrical component. This arrangement is advantageous, because a heat transfer path from the heat generating elements 551 and 552 to the motor housing 531 is shortened as the heat generating elements 551 and 552 are disposed adjacent to the through hole 544 in the printed board assembly 540, thus, thermal resistance is reduced; while increasing heat dissipation efficiency of the electronic device and maintaining a temperature of the heat generating elements 551 and 552 to be low, or minimizing a temperature increase, a performance of the heat generating elements 551 and 552 may be increased.

In another embodiment of the electronic device, a material of the motor housing (531) may comprise a metal, preferably, a metal selected from one of aluminum, stainless steel and copper alloys. Said metals have the advantage of being excellent heat conductors and being less prone to corrosion, thus, increasing heat transfer efficiency and improving lifetime of the electric device.

## Claims

1. An electronic device (101, 102, 104) comprising at least one heat generating element (551, 552), the electronic device (101, 102, 104) comprising:
a printed board assembly (540) on which the heat generating element (551, 552) is disposed;
a battery (189, 470, 510); a battery support frame (511) configured to support the battery (189, 470, 510) therein; and
a motor (530) disposed between the printed board assembly (540) and the battery support frame (511),
wherein the motor (530) comprises a motor housing (531) including a first surface (210A, 532) configured to directly or indirectly contact the printed board assembly (540) and to receive a heat of the heat generating element (551, 552) from the printed board assembly (540), and a second surface (210B, 533) configured to directly or indirectly contact the battery support frame (511) and to transfer a heat of the heat generating element (551, 552) to the battery support frame (511);
wherein the printed board assembly (540) further comprises an electrical component (543) with a lower heat generation amount than that of the heat generating element (551, 552), and
wherein the heat generating element (551, 552) is disposed closer to an area of the printed board assembly (540) in contact with the first surface (210A, 532) of the motor housing (531) than the electrical component (543).

2. The electronic device (101, 102, 104) of claim 1, further comprising:
a heat transfer member (502) configured to contact an area of the printed board assembly (540) on which the heat generating element is disposed,
wherein the motor (530) is disposed between the heat transfer member (502) and the battery support frame (511), and
the first surface (210A, 532) of the motor housing (531) is configured to directly contact the printed board assembly (540) and to indirectly contact the heat transfer member (502), or to indirectly contact the printed board assembly (540) and to directly contact the heat transfer member (502) in order to receive a heat of the heat generating element (551, 552) from the printed board assembly (540).

3. The electronic device (101, 102, 104) of claims 1 or 2, further comprising a first thermal interface (534) including a thermally conductive material and disposed between the first surface (210A, 532) of the motor housing (531) and the printed board assembly (540) and including a thermally conductive material or between the first surface (210A, 532) of the motor housing (531) and the heat transfer member (502).

4. The electronic device (101, 102, 104) of one of the preceding claims, further comprising a second thermal interface (535) disposed between the second surface (210B, 533) of the motor housing (531) and the battery support frame (511) and including a thermally conductive material.

5. The electronic device (101, 102, 104) of any one of claims 3 or 4, wherein the thermally conductive material comprises a flexible material.

6. The electronic device (101, 102, 104) of one of the preceding claims, wherein the printed board assembly (540) comprises a heat transfer surface (504) formed in an area facing the first surface (210A, 532) of the motor housing (531).

7. The electronic device (101, 102, 104) of claim 6, wherein the heat generating element (551, 552) comprises at least one ground electrode (551a, 551b), and the heat transfer surface (504) is electrically connected to the ground electrode (551a, 551b) of the heat generating element (551, 552).

8. The electronic device (101, 102, 104) of claim 7, wherein the printed board assembly (540) includes a ground pad (541) and at least one ground wire (542) formed on an area thereof, the ground pad (541) directly or indirectly contacts the first surface (210A, 532) of the motor housing (531) forming the heat transfer surface (504), and
the ground wire (542) having one end electrically connected to the ground pad (541) and the other end electrically connected to the ground electrode (551a, 551b) of the heat generating element (551, 552).

9. The electronic device (101, 102, 104) of one of the preceding claims, wherein the heat generating element (551, 552) is disposed to at least partially overlap an area of the printed board assembly (540) facing the first surface (210A, 532) of the motor housing (531).

10. The electronic device of claims 2 to 5, wherein the printed board assembly (540) is disposed to face the heat transfer member (502) at one surface and to face the battery support frame (511) at the other surface,
the printed board assembly (540) comprises a through hole (544) formed in at least a partial area thereof, and
the motor housing (531) is disposed to directly or indirectly contact the heat transfer member (502) and the battery support frame (511) through the through hole (544).

11. The electronic device (101, 102, 104) of claim 10,
wherein the heat generating element (551) is disposed closer to the through hole (544) in which the motor (530) is disposed than the electrical component (543).

## Patentansprüche

1. Elektronische Vorrichtung (101, 102, 104) mit mindestens einem wärmeerzeugenden Element (551, 552), wobei die elektronische Vorrichtung (101, 102, 104) Folgendes umfasst:
eine Leiterplattenbaugruppe (540), auf der das wärmeerzeugende Element (551, 552) angeordnet ist;
eine Batterie (189, 470, 510); einen Batteriestützrahmen (511), der dazu konfiguriert ist, die Batterie (189, 470, 510) darin abzustützen; und
einen Motor (530), der zwischen der Leiterplattenbaugruppe (540) und dem Batteriestützrahmen (511) angeordnet ist,
wobei der Motor (530) ein Motorgehäuse (531) umfasst, das eine erste Oberfläche (210A, 532), die so konfiguriert ist, dass sie direkt oder indirekt mit der Leiterplattenbaugruppe (540) in Kontakt steht und Wärme des wärmeerzeugenden Elements (551, 552) von der Leiterplattenbaugruppe (540) aufnimmt, und eine zweite Oberfläche (210B, 533), die so konfiguriert ist, dass sie direkt oder indirekt mit dem Batteriestützrahmen (511) in Kontakt steht und Wärme des wärmeerzeugenden Elements (551, 552) an den Batteriestützrahmen (511) überträgt, umfasst;
wobei die Leiterplattenbaugruppe (540) ferner eine elektrische Komponente (543) umfasst, deren Wärmeerzeugungsmenge geringer ist als die des wärmeerzeugenden Elements (551, 552), und
wobei das wärmeerzeugende Element (551, 552) näher an einem Bereich der Leiterplattenbaugruppe (540) angeordnet ist, der mit der ersten Oberfläche (210A, 532) des Motorgehäuses (531) in Kontakt steht, als die elektrische Komponente (543).

2. Elektronische Vorrichtung (101, 102, 104) nach Anspruch 1, umfassend ferner:
ein Wärmeübertragungselement (502), das so konfiguriert ist, dass es mit einem Bereich der Leiterplattenbaugruppe (540) in Kontakt steht, auf dem das wärmeerzeugende Element angeordnet ist,
wobei der Motor (530) zwischen dem Wärmeübertragungselement (502) und dem Batteriestützrahmen (511) angeordnet ist, und
die erste Oberfläche (210A, 532) des Motorgehäuses (531) so konfiguriert ist, dass sie die Leiterplattenbaugruppe (540) direkt und das Wärmeübertragungselement (502) indirekt berührt, oder die Leiterplattenbaugruppe (540) indirekt und das Wärmeübertragungselement (502) direkt berührt, um Wärme des wärmeerzeugenden Elements (551, 552) von der Leiterplattenbaugruppe (540) aufzunehmen.

3. Elektronische Vorrichtung (101, 102, 104) nach Anspruch 1 oder 2, umfassend ferner eine erste thermische Schnittstelle (534), die ein wärmeleitendes Material enthält und zwischen der ersten Oberfläche (210A, 532) des Motorgehäuses (531) und der Leiterplattenbaugruppe (540) angeordnet ist und ein wärmeleitendes Material enthält oder zwischen der ersten Oberfläche (210A, 532) des Motorgehäuses (531) und dem Wärmeübertragungselement (502).

4. Elektronische Vorrichtung (101, 102, 104) nach einem der vorstehenden Ansprüche, umfassend ferner eine zweite thermische Schnittstelle (535), die zwischen der zweiten Oberfläche (210B, 533) des Motorgehäuses (531) und dem Batteriestützrahmen (511) angeordnet ist und ein wärmeleitendes Material enthält.

5. Elektronische Vorrichtung (101, 102, 104) nach einem der Ansprüche 3 oder 4, wobei das wärmeleitende Material ein flexibles Material umfasst.

6. Elektronische Vorrichtung (101, 102, 104) nach einem der vorstehenden Ansprüche, wobei die Leiterplattenbaugruppe (540) eine Wärmeübertragungsfläche (504) umfasst, die in einem der ersten Oberfläche (210A, 532) des Motorgehäuses (531) zugewandten Bereich ausgebildet ist.

7. Elektronische Vorrichtung (101, 102, 104) nach Anspruch 6, wobei das wärmeerzeugende Element (551, 552) mindestens eine Masseelektrode (551a, 551b) umfasst und die Wärmeübertragungsfläche (504) elektrisch mit der Masseelektrode (551a, 551b) des wärmeerzeugenden Elements (551, 552) verbunden ist.

8. Elektronische Vorrichtung (101, 102, 104) nach Anspruch 7, wobei die Leiterplattenbaugruppe (540) ein Massepad (541) und mindestens einen auf einem Bereich davon ausgebildeten Massedraht (542) umfasst, wobei das Massepad (541) direkt oder indirekt mit der ersten Oberfläche (210A, 532) des Motorgehäuses (531), die die Wärmeübertragungsfläche (504) bildet, und
wobei der Massedraht (542) mit einem Ende elektrisch mit dem Massepad (541) und mit dem anderen Ende elektrisch mit der Masseelektrode (551a, 551b) des wärmeerzeugenden Elements (551, 552) verbunden ist.

9. Elektronische Vorrichtung (101, 102, 104) nach einem der vorstehenden Ansprüche, wobei das wärmeerzeugende Element (551, 552) so angeordnet ist, dass es einen der ersten Oberfläche (210A, 532) des Motorgehäuses (531) zugewandten Bereich der Leiterplattenbaugruppe (540) zumindest teilweise überlappt.

10. Elektronische Vorrichtung nach den Ansprüchen 2 bis 5, wobei die Leiterplattenbaugruppe (540) so angeordnet ist, dass sie an einer Oberfläche dem Wärmeübertragungselement (502) und an der anderen Oberfläche dem Batteriestützrahmen (511) zugewandt ist,
die Leiterplattenbaugruppe (540) ein Durchgangsloch (544) umfasst, das in mindestens einem Teilbereich davon ausgebildet ist, und
das Motorgehäuse (531) so angeordnet ist, dass es das Wärmeübertragungselement (502) und den Batteriestützrahmen (511) direkt oder indirekt durch das Durchgangsloch (544) berührt.

11. Elektronische Vorrichtung (101, 102, 104) nach Anspruch 10,
wobei das wärmeerzeugende Element (551) näher an dem Durchgangsloch (544), in dem der Motor (530) angeordnet ist, angeordnet ist als die elektrische Komponente (543).

## Revendications

1. Dispositif électronique (101, 102, 104) comprenant au moins un élément générateur de chaleur (551, 552), le dispositif électronique (101, 102, 104) comprenant :
un ensemble de carte imprimée (540) sur lequel est disposé l'élément générateur de chaleur (551, 552) ;
une batterie (189, 470, 510) ; un châssis de support de batterie (511) configuré pour supporter la batterie (189, 470, 510) ; et
un moteur (530) disposé entre l'ensemble de carte imprimée (540) et le châssis de support de batterie (511),
dans lequel le moteur (530) comprend un boîtier de moteur (531) comprenant une première surface (210A, 532) configurée pour être en contact direct ou indirect avec l'ensemble de carte imprimée (540) et pour recevoir une chaleur de l'élément générateur de chaleur (551, 552) provenant de l'ensemble de carte imprimée (540), et une seconde surface (210B, 533) configurée pour être en contact direct ou indirect avec le châssis de support de batterie (511) et pour transférer une chaleur de l'élément générateur de chaleur (551, 552) vers le châssis de support de batterie (511) ;
dans lequel l'ensemble de carte imprimée (540) comprend en outre un composant électrique (543) ayant une génération de chaleur inférieure à celle de l'élément générateur de chaleur (551, 552), et
dans lequel l'élément générateur de chaleur (551, 552) est disposé plus près d'une zone de l'ensemble de carte imprimée (540) en contact avec la première surface (210A, 532) du boîtier de moteur (531) que le composant électrique (543).

2. Dispositif électronique (101, 102, 104) selon la revendication 1, comprenant en outre :
un élément de transfert thermique (502) configuré pour être en contact avec une zone de l'ensemble de carte imprimée (540) sur laquelle est disposé l'élément générateur de chaleur,
dans lequel le moteur (530) est disposé entre l'élément de transfert thermique (502) et le châssis de support de batterie (511), et
la première surface (210A, 532) du boîtier de moteur (531) est configurée pour être en contact direct avec l'ensemble de carte imprimée (540) et en contact indirect avec l'élément de transfert thermique (502), ou pour être en contact indirect avec l'ensemble de carte imprimée (540) et en contact direct avec l'élément de transfert thermique (502), afin de recevoir une chaleur de l'élément générateur de chaleur (551, 552) provenant de l'ensemble de carte imprimée (540).

3. Dispositif électronique (101, 102, 104) selon la revendication 1 ou 2, comprenant en outre une première interface thermique (534) comprenant un matériau thermoconducteur et disposée entre la première surface (210A, 532) du boîtier de moteur (531) et l'ensemble de carte imprimée (540), comprenant un matériau thermoconducteur ou entre la première surface (210A, 532) du boîtier de moteur (531) et l'élément de transfert thermique (502).

4. Dispositif électronique (101, 102, 104) selon l'une quelconque des revendications précédentes, comprenant en outre une seconde interface thermique (535) disposée entre la seconde surface (210B, 533) du boîtier de moteur (531) et le châssis de support de batterie (511) et comprenant un matériau thermoconducteur.

5. Dispositif électronique (101, 102, 104) selon l'une quelconque des revendications 3 ou 4, dans lequel le matériau thermoconducteur comprend un matériau flexible.

6. Dispositif électronique (101, 102, 104) selon l'une quelconque des revendications précédentes, dans lequel l'ensemble de carte imprimée (540) comprend une surface de transfert thermique (504) formée dans une zone faisant face à la première surface (210A, 532) du boîtier de moteur (531).

7. Dispositif électronique (101, 102, 104) selon la revendication 6, dans lequel l'élément générateur de chaleur (551, 552) comprend au moins une électrode de masse (551a, 551b), et la surface de transfert thermique (504) est électriquement connectée à l'électrode de masse (551a, 551b) de l'élément générateur de chaleur (551, 552).

8. Dispositif électronique (101, 102, 104) selon la revendication 7, dans lequel l'ensemble de carte imprimée (540) comprend une pastille de masse (541) et au moins un fil de masse (542) formé sur une zone de celui-ci, la pastille de masse (541) étant en contact direct ou indirect avec la première surface (210A, 532) du boîtier de moteur (531) formant la surface de transfert thermique (504), et
le fil de masse (542) ayant une extrémité électriquement connectée à la pastille de masse (541) et une autre extrémité électriquement connectée à l'électrode de masse (551a, 551b) de l'élément générateur de chaleur (551, 552).

9. Dispositif électronique (101, 102, 104) selon l'une quelconque des revendications précédentes, dans lequel l'élément générateur de chaleur (551, 552) est disposé de manière à chevaucher au moins partiellement une zone de l'ensemble de carte imprimée (540) faisant face à la première surface (210A, 532) du boîtier de moteur (531).

10. Dispositif électronique selon les revendications 2 à 5, dans lequel l'ensemble de carte imprimée (540) est disposé de manière à faire face à l'élément de transfert thermique (502) sur une surface et à faire face au châssis de support de batterie (511) sur l'autre surface,
l'ensemble de carte imprimée (540) comprend un trou traversant (544) formé dans au moins une zone partielle de celui-ci, et
le boîtier de moteur (531) est disposé de manière à être en contact direct ou indirect avec l'élément de transfert thermique (502) et le châssis de support de batterie (511) à travers le trou traversant (544).

11. Dispositif électronique (101, 102, 104) selon la revendication 10,
dans lequel l'élément générateur de chaleur (551) est disposé plus près du trou traversant (544) dans lequel le moteur (530) est disposé que le composant électrique (543).
